# EUROPÄISCHE PATENTSCHRIFT

(11) **EP 3 591 277 B1**
(45) Veröffentlichungstag und Bekanntmachung des Hinweises auf die Patenterteilung: **17.02.2021**
(21) Anmeldenummer: 19187825.5
(22) Anmeldetag: 08.11.2013
(51) Int. Cl.: F16L 37/098, F16L 37/084, F16L 37/138

(54) **SCHNELLKUPPLUNG**
QUICK CONNECTOR
RACCORD RAPIDE

(30) Priorität: 15.01.2013 US 201361752787 P; 05.02.2013 US 201361760864 P
(43) Veröffentlichungstag der Anmeldung: 08.01.2020
(62) Teilanmeldung aus: 13192083.7
(73) Patentinhaber: TI Automotive (Fuldabrück) GmbH, 34277 Fuldabrück (DE)
(72) Erfinder: Barthel, Iris, 34270 Schauenburg (DE); Bol, Alexander, 34225 Baunatal, Guntershausen (DE); Jensen, Hans, 73265 Dettingen unter Teck (DE); Pepe, Richard M., Macomb, Michigan, 48044 (US); Choo, Albert (Seong-Hwa), 407-053 Incheon (KR); Bube, Kay, 36277 Schenklengsfeld (DE)
(74) Vertreter: Andrejewski - Honke Patent- und Rechtsanwälte Partnerschaft mbB

(56) Entgegenhaltungen:
- WO-A1-2014/019757
- DE-C1- 10 126 205
- DE-C1- 19 822 574
- US-A- 3 873 062

## Beschreibung

Die Erfindung betrifft eine Schnellkupplung zur Herstellung einer trennbaren Verbindung in einer Fluidleitung mit einem Kupplungskörper, einem Einsteckteil, einem Halter und einem Sicherungselement.

Schnellkupplungen der vorstehend genannten Art sind aus der Praxis grundsätzlich bekannt. Dabei hat es sich zunächst bewährt, ein Einsteckteil mit einem Halter in einem Kupplungskörper zu sichern. Zusätzlich kann ein Sicherungselement vorgesehen sein, mit dem eine ordnungsgemäße Fixierung des Einsteckteils in dem Kupplungskörper durch den Halter angezeigt wird. Eine solche Schnellkupplung ist beispielsweise aus EP 1 719 944 B1 bekannt. Ein hufeisenförmiger Rückhalter hält ein Einsteckteil in einem Kupplungskörper, wobei ein ebenfalls hufeisenförmig ausgebildetes Kontrollelement lediglich dann in radialer Richtung in Bezug auf eine Durchgangsbohrung des Kupplungskörpers beweglich ist, wenn eine Stauchung des Steckelements mit dem Kontrollelement in Kontakt steht. Die Schnellkupplung gemäß EP 1 719 944 B1 hat sich in der Praxis grundsätzlich bewährt. Es ist jedoch erstrebenswert, die Montage einer solchen Schnellkupplung zu vereinfachen.

Das Dokument DE 10120205 C1 offenbart eine Schnellkupplung zur Herstellung einer trennbaren Verbindung in einer Fluidleitung mit einem Kupplungskörper, einem Einsteckteil, einem Halter und einem Sicherungselement, wobei der Halter einen Ringkorpus aufweist, wobei das Sicherungselement einen Ringkörper aufweist, wobei der Ringkorpus und der Ringkörper das Einsteckteil und den Kupplungskörper umlaufen und wobei der Halter über zwei Betätigungseinrichtungen verfügt, und so ausgebildet ist, dass dieser flachgedrückt werden kann.

Der Erfindung liegt daher das technische Problem zugrunde, eine Schnellkupplung der eingangs genannten Art anzugeben, die sich durch eine hohe Funktionssicherheit, eine einfache Montierbarkeit und durch eine hohe Ausfallsicherheit auszeichnet.

Zur Lösung des technischen Problems lehrt die Erfindung eine Schnellkupplung zur Herstellung einer trennbaren Verbindung in einer Fluidleitung gemäß dem Gegenstand des Anspruchs 1. Die erfindungsgemäße Schnellkupplung wird beispielsweise in Fluidleitungssystemen von Brennkraftmaschinen, insbesondere von Fahrzeugen verwendet. Es liegt im Rahmen der Erfindung, dass die Schnellkupplung in einem Bremsleitungssystem, Kraftstoffleitungssystem und/oder in einem Harnstofflösungsleitungssystem eingesetzt wird.

Zweckmäßigerweise ist der Kupplungskörper aus zumindest zwei separaten Teilen, nämlich einem Kopfteil und einem Dichtungsteil, gebildet. Es empfiehlt sich, dass ein Abschnitt des Kopfteils in das Dichtungsteil des Kupplungskörpers eingeführt ist. Vorteilhafterweise ist zumindest das Dichtungsteil des Kupplungskörpers aus einem elektrisch leitfähigen Werkstoff, insbesondere einem elektrisch leitfähigen Kunststoff (ESD-Kunststoff) gefertigt. Gemäß einer Ausführungsform ist der vollständige Kupplungskörper aus dem leitfähigen Material gefertigt. Erfindungsgemäß erstreckt sich die Durchgangsbohrung von einer kopfteilseitigen Einsteckteilaufnahmeöffnung (Eingangsöffnung) des Kupplungskörpers bis zu einer dichtungsteilseitigen Austrittsöffnung (Ausgangsöffnung). Es empfiehlt sich, dass die Durchgangsbohrung kreisrund ausgebildet ist und eine Längsachse bzw. Mittelachse aufweist, die sich im Rahmen der Erfindung von der Eingangsöffnung zu der Austrittsöffnung erstreckt. Zweckmäßigerweise ist die Austrittsöffnung an einem dem Kopfteil abgewandten Ende des Dichtungsteils angeordnet.

Es liegt im Rahmen der Erfindung, dass das Kopfteil mit dem Dichtungsteil vorzugsweise lösbar verrastet ist. Gemäß einer Ausführungsform ist die Verbindung zwischen dem Kopfteil und dem Dichtungsteil fluiddurchlässig bzw. nicht fluiddicht ausgebildet. Grundsätzlich ist es möglich, dass das Kopfteil fluiddicht an das Dichtungsteil angeschlossen ist.

Zweckmäßigerweise verfügt das Kopfteil über Verbindungselemente, die mit dichtungsteilseitigen, komplementären Verbindungselementen zusammenwirken. Zur Herstellung der Rastverbindung zwischen dem Kopfteil und dem Dichtungsteil wird der empfohlenermaßen zylinderförmige bzw. im Wesentlichen zylinderförmige Abschnitt des Kopfteils in die Durchgangsbohrung des Dichtungsteils eingeführt. Der in das Dichtungsteil eingeführte Abschnitt des Kopfteils ist vorzugsweise als das Verbindungselement bzw. die Verbindungselemente tragender Einführabschnitt ausgebildet. Bevorzugt weist das Dichtungsteil zumindest eine Verbindungsöffnung auf, in welche Verbindungsöffnung ein kopfteilseitiger Verbindungsvorsprung zur Sicherung des Kopfteils an dem Dichtungsteil greift. Besonders bevorzugt verfügt eine Wandung des Dichtungsteils über zwei und empfohlenermaßen über vier Verbindungsöffnungen. Die Verbindungsöffnungen sind vorzugsweise äquidistant in der zweckmäßigerweise zylinderförmigen Wandung des Dichtungsteils angeordnet. Gemäß einer bewährten Ausführungsform ist jeder Verbindungsöffnung lediglich ein kopfteilseitiges Verbindungselement zugeordnet. Durch Verlagern des Verbindungsvorsprungs bzw. der Verbindungsvorsprünge in Richtung der Mittelachse der Durchgangsbohrung ist es im Rahmen der Erfindung möglich, das Kopfteil von dem Dichtungsteil zu trennen und zweckmäßigerweise aus der dichtungsteilseitigen Durchgangsbohrung zu entfernen.

Es hat sich bewährt, dass die Durchgangsbohrung in dem Kupplungskörper und vorzugsweise in dem Dichtungsteil einen Dichtungsabschnitt aufweist, in welchem Dichtungsabschnitt zumindest ein Dichtungselement aufgenommen ist. Beispielsweise wird das Dichtungselement von zwei Ringdichtungen gebildet, zwischen welchen Ringdichtungen ein Abstandshalter (Zwischenelement) angeordnet ist.

Das Einsteckteil ist besonders bevorzugt als zweckmäßigerweise zylindrisches Rohr mit einem Strömungskanal ausgebildet, wobei eine Längsachse des Strömungskanals im montierten Zustand vorzugsweise mit der Mittelachse der Durchgangsbohrung fluchtet bzw. ungefähr fluchtet. Es liegt im Rahmen der Erfindung, dass das Einsteckteil eine ringförmige Stauchung aufweist, welche Stauchung über eine bevorzugt zylindrische Dichtungsfläche übersteht. Mit anderen Worten ist die Stauchung als eine auf der dem Strömungskanal abgewandten Oberfläche bzw. der Dichtungsfläche des Steckeckelements angeordnete Wulst ausgebildet. Im montierten Zustand ist das Einsteckteil in die Durchgangsbohrung eingeführt, wobei vorzugsweise das Dichtungselement der Schnellkupplung fluiddicht an der Dichtungsfläche des Einsteckteils anliegt. Gemäß einer Ausführungsform weist das Einsteckteil ein Einführende mit einer konisch ausgebildeten oder kugelschalenabschnittsförmigen Stirnseite auf. Auf diese Weise ist das Einsteckteil problemlos in die Durchgangsbohrung und/oder in das vorzugsweise als O-Ring ausgebildete Dichtungselement einführbar.

Montierter Zustand meint im Rahmen der Erfindung, dass das Einsteckteil in den Kupplungskörper eingeführt ist und in dem Kupplungskörper mit dem Halter festgesetzt ist, wobei der Kupplungskörper vorzugsweise von dem mit dem Dichtungsteil verbundenen Kopfteil gebildet ist. Weiterhin befindet sich das Sicherungselement im montierten Zustand der Schnellkupplung bevorzugt in der Sicherungsposition.

Besonders bevorzugt ist das Sicherungselement ausschließlich in axialer Richtung in Bezug auf die Durchgangsbohrung empfohlenermaßen reversibel aus der freien Position in die Sicherungsposition verlagerbar, wenn das Einsteckteil von dem Halter in dem Kupplungskörper gesichert ist. Erfindungsgemäß stellt die freie Position ein austrittsöffnungsseitiges Ende eines axialen Verschiebeweges dar, entlang welchem Verschiebeweg das Sicherungselement aus der freien Position in die Sicherungsposition verlagerbar ist. Die Sicherungsposition stellt ein eingangsöffnungsseitiges Ende des axialen Verschiebeweges dar.

Zweckmäßigerweise ist das Sicherungselement in der Sicherungsposition bevorzugt reversibel an den Halter angeschlossen bzw. mit dem Halter verbunden. Auf diese Weise wird sichergestellt, dass eine ordnungsgemäße Verbindung zwischen dem Einsteckteil und dem Kupplungskörper zuverlässig und dauerhaft angezeigt wird. Gemäß einer Ausführungsform ist das Sicherungselement in der Sicherungsposition irreversibel an den Halter angeschlossen.

Es liegt im Rahmen der Erfindung, dass das Sicherungselement in der freien Position und/oder in der Sicherungsposition mit dem Halter vorzugsweise reversibel verrastbar ist. Besonders bevorzugt weist das Sicherungselement zumindest ein Kopplungselement auf, welches Kopplungselement in der freien Position des Sicherungselements mit einem komplementären Kopplungselement des Halters zusammenwirkt. Auf diese Weise ist im Rahmen der Erfindung das Sicherungselement in der freien Position mit dem Halter verrastet. Empfohlenermaßen ist das Sicherungselement bevorzugt in axialer Richtung unverschiebbar in der freien Position fixiert, wenn das sicherungselementseitige Kopplungselement mit dem komplementären Kopplungselement des Halters zusammenwirkt. Gemäß einer Ausführungsform ist das Kopplungselement als Kopplungsvorsprung ausgebildet, wobei das komplementäre Kopplungselement als Kopplungsöffnung ausgebildet ist und wobei der Kopplungsvorsprung in der freien Position des Sicherungselements in der Kopplungsöffnung angeordnet ist. Vorteilhafterweise wird durch das Zusammenwirken des sicherungselementseitigen Kopplungselements mit dem halterseitigen, komplementären Kopplungselement eine Verdrehsicherung angegeben, wodurch bevorzugt ein Verdrehen des Sicherungselementes relativ zu dem Halter in der freien Position des Sicherungselements verhindert bzw. ausgeschlossen wird. Gemäß einer Ausführungsform weist das Sicherungselement zwei und empfohlenermaßen lediglich zwei Kopplungselemente auf, welche Kopplungselemente vorzugsweise diametral an dem Ringkörper des Halters angeordnet sind. Jedem Kopplungselement ist zweckmäßigerweise eine Kopplungsöffnung zugeordnet.

Gemäß einer vorteilhaften Ausführungsform ist/sind das Sicherungselement und/oder der Halter jeweils unverlierbar an dem Kupplungskörper gehalten. Empfohlenermaßen weist der Ringkörper des Sicherungselements einen vorzugsweise ovalen Querschnitt auf. Vorzugsweise weist der Ringkorpus des Halters einen ovalen Querschnitt auf. Es liegt im Rahmen der Erfindung, dass der Kupplungskörper, vorzugsweise das Kopfteil im montierten Zustand der Schnellkupplung innerhalb eines von dem Ringkorpus definierten Innenraums und innerhalb eines von dem Ringkörper definierten Innenraums angeordnet ist. Grundsätzlich ist es möglich, dass der Ringkörper und/oder Ringkorpus einen viereckigen bzw. rechteckigen Querschnitt aufweist/aufweisen, wobei die Ecken des Vierecks bzw. Rechtecks abgerundet sind. Gemäß einer Ausführungsform ist der Ringkörper und/oder Ringkorpus kreisrund ausgebildet.

Es empfiehlt sich, dass zur Herstellung eines vormontierten Zustands der Schnellkupplung das Kopfteil des Kupplungskörpers in den Innenraum des Ringkorpus des Halters und in den Innenraum des Ringkörpers des Sicherungselements eingeführt wird, so dass bevorzugt der Ringkörper und der Ringkorpus jeweils das Kopfteil umlaufen. Bevorzugt wird das den Ringkörper und den Ringkorpus tragende Kopfteil dann zur Bildung des vormontierten Zustands mit dem Dichtungsteil verbunden. Im vormontierten Zustand ist vorzugsweise das Einsteckteil nicht in dem Kupplungskörper angeordnet bzw. in dem Kupplungskörper gesichert. Im vormontierten Zustand und besonders bevorzugt im montierten Zustand wird zweckmäßigerweise sichergestellt, dass der Halter und/oder das Sicherungselement nicht von dem Kupplungskörper in axialer oder radialer Richtung herunterziehbar ist/sind. Gemäß einer bevorzugten Ausführungsform ist der Halter zwischen dem Sicherungselement und der Eingangsöffnung des Kopfteils an dem Kupplungskörper angeordnet.

Zweckmäßigerweise weist der Kupplungskörper und vorzugsweise das Kopfteil einen die Eingangsöffnung umlaufenden Kragen auf, wobei der bevorzugt kopfteilseitige Kragen gemäß einer Ausführungsform ein Ziehen des Halters und/ oder des Sicherungselements von dem Kupplungskörper zweckmäßigerweise in axialer Richtung bzw. in Richtung der Eingangsöffnung verhindert. Vorzugsweise weist der Kragen einen größeren Querschnitt als das Kopfteil in einem Bereich auf, in welchem Bereich im montierten und/oder vormontierten Zustand der Halter und/oder das Sicherungselement angeordnet ist/sind. Empfohlenermaßen überdeckt der kopfteilseitige Kragen den Halter und/oder das Sicherungselement im montierten Zustand und vormontierten Zustand vollständig bzw. im Wesentlichen vollständig. Überdecken meint im Rahmen der Erfindung, dass der Kragen in einer Draufsicht auf den Kragen den Halter und/oder das Sicherungselement vollständig bzw. im Wesentlichen vollständig verdeckt. Es liegt im Rahmen der Erfindung, dass der Kragen eine ovale bzw. ungefähr ovale Querschnittsfläche aufweist, wobei in der Querschnittsfläche des Kragens die Einführöffnung für das Einsteckelement angeordnet ist. Bevorzugt weist das Dichtungsteil einen größeren Umfang als das Kopfteil auf, so dass das Sicherungselement und/oder der Halter nicht in axialer Richtung und in Richtung der Austrittsöffnung von dem Kupplungskörper ziehbar ist/sind.

Vorzugsweise ragt das Kopplungselement in der freien Position des Sicherungselements in radialer Richtung in die Durchgangsbohrung, wobei das Kopplungselement beim Einführen des Einsteckteils in den Kupplungskörper durch die Stauchung des Einsteckteils derart in radialer Richtung von der Längsachse der Durchgangsbohrung wegdrückbar ist, dass das Kopplungselement aus der Kopplungsöffnung herausdrückbar ist und dass das Sicherungselement in axialer Richtung aus der freien Position in die Sicherungsposition verschiebbar ist.

Gemäß einer Ausführungsform liegt das sicherungselementseitige Kopplungselement beziehungsweise liegen die sicherungselementseitigen Kopplungselemente an einem halterseitigen Federarm (Hebearm) beziehungsweise jeweils an einem halterseitigen Federarm (Hebearm) an. Vorzugsweise beaufschlagt die Stauchung des Einsteckteils bevorzugt lediglich den halterseitigen Hebearm bzw. die halterseitigen Hebearme mit der Maßgabe, dass das sicherungselementseitige Kopplungselement beziehungsweise die sicherungselementseitigen Kopplungselemente in radialer Richtung von der Längsachse der Durchgangsbohrung weggedrückt wird bzw. werden, so dass das Sicherungselement in axialer Richtung aus der freien Position in die Sicherungsposition verschiebbar ist. Der Hebearm bzw. die Hebearme ist bzw. sind zweckmäßigerweise einstückig mit dem Halter ausgebildet. Empfohlenermaßen liegt das sicherungselementseitige Kopplungselement an dem Hebearm bzw. die sicherungselementseitigen Kopplungselemente jeweils besonders bevorzugt unmittelbar an einem Hebearm an, so dass gemäß einer Ausführungsform die radiale Stauchung des Einsteckteils ausschließlich über den Hebearm bzw. die Hebearme gegen das Kopplungselement bzw. die Kopplungselemente drückt. Empfohlenermaßen liegt der Hebearm bzw. liegen die Hebearme an einer der Durchgangsbohrung abgewandten Oberfläche des Hebearms bzw. der Hebearme an dem Hebearm bzw. an den Hebearmen an. Gemäß einer Ausführungsform drückt die radiale Stauchung des Einsteckteils unmittelbar gegen das Kopplungselement bzw. die Kopplungselemente des Sicherungselements. Gemäß einer weiteren Ausführungsform übt die radiale Stauchung des Einsteckteils ausschließlich über den Hebearm bzw. die Hebearme einen Druck auf das sicherungselementseitige Kopplungselement bzw. auf die sicherungselementseitigen Kopplungselemente aus. Es liegt im Rahmen der Erfindung, dass die Kopplungselemente durch die radiale Stauchung auseinander gedrückt werden, wodurch das Sicherungselement bevorzugt verformt wird und das Sicherungselement vorzugsweise reversibel aus der freien Position in die Sicherungsposition verlagerbar ist.

Zweckmäßigerweise weist das Kopplungselement eine derart ausgebildete schräge Pressfläche auf, dass das Sicherungselement von der Eingangsöffnung weggedrückt wird, wenn die Stauchung des Einsteckteils an der schrägen Pressfläche anliegt und dadurch das Kopplungselement von der Längsachse der Durchgangsbohrung wegdrückt. Die schräge Pressfläche ist relativ zu der Längsachse der Durchgangsbohrung schräg orientiert, wobei sich die schräge Pressfläche ausgehend von einem eingangsöffnungsseitigen Ende hin zu einem ausgangsöffnungsseitigen Ende schräg in Richtung der Längsachse der Durchgangsbohrung erstreckt. Wird das mit der Stauchung versehene Einsteckteil beispielsweise in den mit dem Halter und dem Sicherungselement vormontierten Kupplungskörper eingeführt, muss die Stauchung des Einsteckteils zunächst durch die Eingangsöffnung in Richtung der Ausgangsöffnung in die Durchgangsbohrung eingeführt werden. Die Bewegung des Einsteckteils ausgehend von der Eingangsöffnung in Richtung der Austrittsöffnung wird im Rahmen der Erfindung als Einführrichtung bezeichnet. Nach dem Einführen des Einsteckteils in Einführrichtung in die Eintrittsöffnung passiert die Stauchung empfohlenermaßen zunächst die Eintrittsöffnung und vorzugsweise unmittelbar daran anschließend den Halter. Sobald die Stauchung in Einführrichtung an dem Halter vorbeibewegt ist, beaufschlagt die Stauchung zweckmäßigerweise die schräge Pressfläche des Sicherungselements. Durch die Kraftbeaufschlagung der schrägen Pressfläche durch die Stauchung des Einsteckteils wird das Sicherungselement vorzugsweise in Richtung der Austrittsöffnung axial verlagert und besonders bevorzugt wird das Kopplungselement in radialer Richtung von der Längsachse der Durchgangsbohrung weggedrückt.

Gemäß einer Ausführungsform weist der Halter eine Kopplungselementaufnahme auf, welche Kopplungselementaufnahme empfohlenermaßen lediglich auf einer der Durchgangsbohrung abgewandten Oberfläche des Halters offen ausgebildet ist und wobei das sicherungselementseitige Kopplungselement in der Sicherungsposition in der Kopplungselementaufnahme aufnehmbar ist. Zweckmäßigerweise ist das Sicherungselement lediglich bzw. ausschließlich aus der freien Position in die Sicherungsposition verlagerbar, wenn das Kopplungselement in eine Verlagerungsposition überführt wird. Das Kopplungselement des Sicherungselements ist in der Verlagerungsposition, wenn die Stauchung des Einsteckteils an der schrägen Pressfläche anliegt und das Kopplungselement von der Längsachse der Durchgangsbohrung weggedrückt ist.

Gemäß einer Ausführungsform weist vorzugsweise jedes Kopplungselement besonders bevorzugt jeweils eine eingangsöffnungsseitige, quer zur Längsachse der Durchgangsbohrung orientierte Stirnfläche auf, welche Stirnfläche zur Anlage an eine an dem komplementären Kopplungselement ausgebildete Blockierfläche bringbar ist, wenn sich das Sicherungselement in der freien Position befindet und entgegen der Einsteckrichtung des Einsteckteils in Richtung der Eingangsöffnung verlagert werden soll. Sobald die kopplungselementseitige Stirnfläche zur Anlage an die Blockierfläche des komplementären Kopplungselements gebracht ist, ist eine weitere, axiale Verlagerung des Sicherungselements in Richtung der Eingangsöffnung ausgeschlossen. Durch eine Beaufschlagung des Hebearms bzw. der Hebearme des Halters wird das Kopplungselement bzw. werden die Kupplungselemente in radialer Richtung von dem Einsteckteil weggedrückt, so dass die sicherungselementseitige Stirnfläche bzw. die sicherungselementseitigen Stirnflächen von der halterseitigen Blockierfläche bzw. den halterseitigen Blockierflächen freikommen (Verlagerungspositionen). Aus der Verlagerungsposition ist das Sicherungselement in die Sicherungsposition vorzugsweise entgegen der Einsteckrichtung des Einsteckteils verlagerbar, wobei in der Sicherungsposition das Kopplungselement bzw. die Kopplungselemente mit dem komplementären Kopplungselement bzw. den komplementären Kopplungselementen verrastet ist bzw. sind. Es empfiehlt sich, dass durch eine axiale Verlagerung des Sicherungselements vorzugsweise parallel zu der Längsachse der Durchgangsbohrung in Richtung der Eintrittsöffnung das Kopplungselement in die halterseitige Kopplungselementaufnahme überführt wird. Es ist möglich, dass das Sicherungselement in der Sicherungsposition irreversibel mit dem Halter verrastet ist.

Gemäß einer bevorzugten Ausführungsform weist das Sicherungselement vorzugsweise zwei als Kopplungsvorsprünge ausgebildete Kopplungselemente auf, wobei die Kopplungsvorsprünge einen in Richtung eines Durchmessers bzw. einer Zentrale der Durchgangsbohrung eingestellten Abstand zueinander aufweisen, welcher Abstand kleiner als der Durchmesser der Stauchung des Einsteckteils ist, so dass das Einsteckteil in der Sicherungsposition des Sicherungselements jeweils durch den Halter und das Sicherungselement in dem Kupplungskörper gesichert ist. Gemäß einer Ausführungsform weisen die zwischen dem Einsteckteil und dem sicherungselementseitigen Kopplungselement bzw. den sicherungselementseitigen Kopplungselementen angeordneten Hebearme des Halters einen Abstand auf, welcher Abstand besonders bevorzugt kleiner als der Durchmesser (Außendurchmesser) der radialen Stauchung ist. Zweckmäßigerweise sind die Hebearme einander diametral gegenüberliegend an dem Halter angeschlossen, wobei besonders bevorzugt jedem Hebearm lediglich ein Kopplungsarm zugeordnet ist. Zweckmäßigerweise wird durch den Halter und das Sicherungselement das Einsteckteil redundant in der Durchgangsbohrung des Kupplungskörpers gesichert. Kann beispielsweise der Halter aufgrund einer mechanischen Beschädigung das Einsteckteil nicht mehr in dem Kopplungskörper sichern, übernimmt das Sicherungselement mit dem Kopplungsvorsprung bzw. mit den Kopplungsvorsprüngen die Sicherung des Einsteckteils in der Durchgangsbohrung des Kupplungskörpers. Es liegt im Rahmen der Erfindung, dass die sicherungselementseitigen Kopplungselemente jeweils in einer halterseitigen Kopplungselementaufnahme aufgenommen sind, wenn das Sicherungselement in der Sicherungsposition angeordnet ist und auf diese Weise die komplementären Kopplungselemente des Halters gegen das Einsteckteil drücken. Auf diese Weise wird sichergestellt, dass bei einem Bewegen des Einsteckteils entgegen der Einsteckrichtung unabhängig von der Funktionsfähigkeit des Halters die Stauchung zur Anlage an die Blockierflächen (nachfolgend Verriegelungsflächen) der komplementären Kopplungselemente gebracht wird und folglich nicht aus der Durchgangsbohrung herausziehbar ist.

Vorzugsweise weist der Halter zumindest ein Halteelement auf, welches Halteelement im montierten Zustand mit der Stauchung des Einsteckteils zusammenwirkt und mit welchem Halteelement das Einsteckteil in dem Kupplungskörper sicherbar ist. Bevorzugt durchgreift das Halteelement eine in dem Kupplungskörper, vorzugsweise in dem Kopfteil des Kupplungskörpers, angeordnete Aussparung, um das Einsteckteil in dem Kupplungskörper zu sichern. Bevorzugt wird durch das Halteelement und die dem Halteelement zugeordnete Aussparung eine Verdrehsicherung angegeben, durch welche Verdrehsicherung ein Verdrehen des Halters relativ zu dem Kupplungskörper ausgeschlossen wird. Es empfiehlt sich, dass der Halter zwei, vorzugsweise lediglich zwei Haltelemente aufweist, wobei jedem Halteelement jeweils eine Aussparung in dem Kupplungskörper bzw. in dem Kopfteil des Kupplungskörpers zugeordnet ist.

Empfohlenermaßen greifen die Halteelemente im montierten Zustand der Schnellkupplung durch die Aussparungen und wechselwirken derart mit der Stauchung des Einsteckteils, dass das Einsteckteil in dem Steckverbinderkörper gesichert ist. Gemäß einer bevorzugten Ausführungsform sind die vorzugsweise zwei Halteelemente einander gegenüberliegend bzw. diametral an dem Halter bzw. an dem Ringkorpus angeordnet. Abgesehen von der Position an dem Ringkorpus bzw. Halter sind die Halteelemente zweckmäßigerweise identisch bzw. im Wesentlichen identisch ausgebildet. Bevorzugt ist das Halteelement bzw. sind die Halteelemente derart an den Ringkorpus des Halters angeschlossen, dass das Halteelement bzw. die Halteelemente in radialer Richtung auf die Mittelachse der Durchgangsbohrung weist bzw. weisen und besonders bevorzugt federnd an dem Ringkorpus gelagert ist bzw. sind. Vorteilhafterweise wirkt eine Federkraft auf das Halteelement bzw. auf die Halteelemente, durch welche Federkraft das Haltelement bzw. die Halteelemente in Richtung der Mittelachse der Durchgangsbohrung gedrückt wird bzw. werden

Gemäß einer Ausführungsform ist in einem Halteelement eine Kopplungselementaufnahme ausgebildet, wobei die Öffnung der Kopplungselementaufnahme in einer der Durchgangsbohrung abgewandte Stirnfläche des Halteelements ausgebildet ist. Die Anzahl der Kopplungselementaufnahmen entspricht gemäß einer vorteilhaften Ausführungsform der Anzahl der an dem Ringkorpus angeschlossenen Halteelemente.

Vorteilhafterweise weist das bzw. jedes Halteelement eine schräg zu der Mittelachse der Durchgangsbohrung orientierte Einführfläche auf, welche Einführfläche derart ausgebildet ist, dass das Halteelement beim Einführen des Einsteckteils in die Durchgangsbohrung durch die Stauchung radial in Bezug auf die Durchgangsbohrung nach außen drückbar ist. Gemäß einer bevorzugten Ausführungsform erstreckt sich die Einführfläche ausgehend von einem eingangsöffnungsseitigen Ende der Einführfläche hin zu einem austrittsöffnungsseitigen Ende der Einführfläche vorzugsweise im montierten Zustand der Schnellkupplung in radialer Richtung schräg nach innen bzw. in Richtung der Mittelachse und der Austrittsöffnung der Durchgangsbohrung. Zweckmäßigerweise wird das Einsteckteil zur Herstellung des montierten Zustandes in den mit dem Halter und dem Sicherungselement versehenen Kupplungskörper bzw. in den vormontierten Kupplungskörper eingeführt. Beim Einführen wird die Stauchung des Einsteckteils gemäß einer Ausführungsform in Kontakt mit der Einführfläche bzw. mit den Einführflächen gebracht, so dass das Halteelement bzw. die Halteelemente in radialer Richtung nach außen bzw. von der Mittelachse der Durchgangsbohrung weggedrückt wird bzw. werden. Sobald die Stauchung des Einsteckteils zweckmäßigerweise an dem Halteelement bzw. an den Halteelementen in axialer Richtung vorbeibewegt ist, wird das Halteelement bzw. werden die Halteelemente, vorzugweise durch die Federkraft beaufschlagt, radial nach innen in Richtung der Mittelachse gedrückt. Bevorzugt wird eine Verriegelungsfläche des Halteelements bzw. werden die Verriegelungsflächen der Halteelemente zur Anlage an eine zweckmäßigerweise quer zur Längsachse der Durchgangsbohrung orientierte, eingangsöffnungsseitige Anlagefläche der Stauchung des Einsteckteils gebracht. Die Verriegelungsfläche bzw. die Verriegelungsflächen ist/sind besonders bevorzugt quer zur Mittelachse der Durchgangsbohrung orientiert.

Das Halteelement ist bzw. die Halteelemente sind gemäß einer Ausführungsform derart an den Halter angeschlossen, dass die Einführfläche des Halteelements bzw. die Einführflächen der Halteelemente in den Innenraum (Ringinnenraum) des als Ringkorpus ausgebildeten Halters ragt bzw. ragen. Besonders bevorzugt ragt das Halteelement bzw. ragen die Halteelemente ausgehend von dem Ringkorpus ausschließlich in den von dem Ringkorpus definierten Innenraum. Gemäß einer Ausführungsform weist das Halteelement bzw. weist jedes Halteelement eine Kontaktfläche auf, mit welcher Kontaktfläche das Halteelement bzw. jedes Halteelement im montierten Zustand der Schnellkupplung an einem zwischen der Stauchung und der Eingangsöffnung des Kupplungskörpers angeordneten Abschnitt vorzugsweise der Dichtungsfläche des Einsteckteils anliegt. Zweckmäßigerweise weist die Kontaktfläche eine Krümmung auf, welche Krümmung der Krümmung der Dichtungsfläche des Einsteckteils entspricht. Besonders bevorzugt liegt das Halteelement bzw. liegen die Halteelemente lediglich über einen Teil des Umfangs des Einsteckteils an dem Einsteckteil an.

Gemäß einer Ausführungsform weist zumindest ein Halteelement, vorzugsweise jedes Halteelement, ein Arretierelement auf, welches Arretierelement das Halteelement im montierten Zustand gegen eine von der Mittelachse der Durchgangsbohrung wegweisende, radiale Verlagerung bzw. Deformierung sichert. Vorzugsweise weist jedes an den Halter angeschlossene Halteelement jeweils ein Arretierelement auf. Es ist möglich, dass durch einen Druck in dem Fluidsystem, in welches Fluidsystem die Schnellkupplung integriert ist, das Einsteckteil in Richtung des Kragens des Kupplungskörpers bzw. des Kopfteils gedrückt wird. Vorteilhafterweise wird der Halter von dem Einsteckteil durch eine Druckbeaufschlagung in dem Fluidsystem gegen den Kragen gedrückt. Das Arretierelement des jeweiligen Halteelements wirkt vorteilhafterweise mit dem Kupplungskörper zusammen. Zweckmäßigerweise verhindert der Kupplungskörper, insbesondere der kopfteilseitige Kragen, dass das Halteelement bzw. die Halteelemente vorzugsweise bei einer Druckbeaufschlagung des Fluidsystems radial nach außen bzw. von der Mittelachse wegbewegt wird bzw. werden, wodurch das Einsteckteil zuverlässig in dem Steckverbinderkörper gesichert ist. Besonders bevorzugt ist das Arretierelement als ein Arretiervorsprung ausgebildet, wobei der Arretiervorsprung im montierten Zustand an einer durchgangsbohrungsseitigen Ringfläche des Kupplungskörpers, bevorzugt des Kopfteils bzw. des Kragens, anliegt. Der Arretiervorsprung steht gemäß einer Ausführungsform über eine kragenseitige Oberfläche bzw. Stirnseite eines Halteelements bzw. der Halteelemente über. Durch die Anlage des Arretiervorsprungs eines Halteelements an der durchgangsbohrungsseitigen Ringfläche des Kopfteils bzw. des Kragens wird vorteilhafterweise ausgeschlossen, dass das Halteelement bzw. die Halteelemente in radialer Richtung von der Mittelachse der Durchgangsbohrung wegbewegbar ist bzw. sind.

Zweckmäßigerweise weist der Halter zumindest eine Betätigungseinrichtung auf, wobei durch eine vorzugsweise auf die Mittelachse gerichtete Kraftbeaufschlagung der Betätigungseinrichtung der Halter derart deformierbar ist, dass das Halteelement in radialer Richtung von der Mittelachse der Durchgangsbohrung wegbewegbar ist. Die Betätigungseinrichtung ist vorteilhafterweise als Griffplatte bzw. als Druckplatte ausgebildet. Erfindungsgemäß verfügt der Halter über zwei, insbesondere lediglich zwei Betätigungseinrichtungen, die einander gegenüberliegend bzw. diametral am Ringkorpus bzw. am Halter angeordnet sind. Gemäß einer Ausführungsform sind die Betätigungseinrichtungen derart an den Ringkorpus angeschlossen, dass eine die Betätigungseinrichtungen miteinander verbindende Sekante senkrecht zu einer weiteren Sekante orientiert ist, welche weitere Sekante die an dem Ringkorpus angeschlossenen Halteelemente miteinander verbindet. Wird eine Kraft auf die Betätigungseinrichtung bzw. die Betätigungseinrichtungen vorzugsweise in radialer Richtung nach innen bzw. in Richtung der Mittelachse der Durchgangsbohrung ausgeübt, wird der von dem Ringkorpus gebildete Halter flachgedrückt, so dass der Abstand zwischen der Betätigungseinrichtung und der Mittelachse vermindert wird. Gemäß einer besonders bevorzugten Ausführungsform ist ein Abstand zwischen den Halteelementen des Halters zumindest so groß wie der Durchmesser der Stauchung des Einsteckteils, wenn die Betätigungseinrichtungen mit der Kraft beaufschlagt und der Halter flachgedrückt ist.

Gemäß einer Ausführungsform weist das Sicherungselement zumindest ein flächiges Sperrelement auf, welches flächige Sperrelement in der Sicherungsposition und/oder in der freien Position das halterseitige Betätigungselement durchgangsbohrungsseitig hintergreift und das Sicherungselement mit dem Halter derart koppelt, dass der Halter im montierten Zustand der Schnellkupplung ausschließlich zusammen mit dem Sicherungselement deformierbar ist. Vorzugsweise liegt das flächige Sperrelement zumindest abschnittsweise im montierten Zustand der Schnellkupplung durchgangsbohrungsseitig an dem halterseitigen Betätigungselement an. Gemäß einer bevorzugten Ausführungsform verfügt das Sicherungselement über zwei und besonders bevorzugt lediglich zwei flächige Sperrelemente, wobei ein flächiges Sperrelement an einem dem flächigen Sperrelement zugeordneten Betätigungselement im montierten Zustand der Schnellkupplung anliegt.

Es liegt im Rahmen der Erfindung, dass das in der Sicherungsposition befindliche Sicherungselement deformiert wird bzw. definierbar ist, wenn durch eine Druckbeaufschlagung der Betätigungseinrichtung bzw. Betätigungseinrichtungen der Halter deformiert wird. Das an den Ringkorpus angeschlossene Halteelement bzw. die an dem Ringkorpus angeschlossenen Halteelemente werden vorzugsweise durch die Deformation des Ringkorpus radial nach außen bzw. von der Mittelachse wegbewegt, so dass die in den halteelementseitigen Kopplungselementaufnahmen aufgenommenen Kopplungselemente des Sicherungselements ebenfalls radial nach außen bzw. von der Mittelachse der Durchgangsbohrung wegbewegt werden und die Stauchung des Einsteckteils freigegeben wird. Die Stauchung kann dann entgegen der Einführrichtung an dem Halteelement bzw. an den Haltelementen vorbei in Richtung des Kragens gleiten.

Im montierten Zustand einer Ausführungsform ist der Halter relativ zu der Eingangsöffnung bzw. zu dem Kragen des Kupplungskörpers, in axialer Richtung derart verschiebbar, dass das Arretierelement des Halters von dem Kupplungskörper, insbesondere von der Ringfläche des Kragens lösbar ist und vorzugsweise in einen gelösten Zustand bringbar ist. Zweckmäßigerweise ist lediglich in dem gelösten Zustand des Arretierelements eine radiale Verlagerung des Halteelementes bzw. der Halteelemente durch eine Kraftbeaufschlagung der Betätigungseinrichtung derart möglich, dass das Halteelement bzw. die Halteelemente die Stauchungen des Einsteckteils freigibt bzw. freigeben. Vorzugsweise ist der Halter bevorzugt mit dem an den Halter angeschlossenen Sicherungselement im montierten Zustand in Richtung der Austrittsöffnung bzw. des Dichtungsteils in axialer Richtung in Einführrichtung von dem Kragen wegbewegbar.

Der Erfindung liegt die Erkenntnis zugrunde, dass sich die erfindungsgemäße Schnellkupplung durch eine vorteilhaft hohe Funktionssicherheit und überraschend einfache Montierbarkeit auszeichnet. Dadurch, dass sowohl der Halter als auch das Sicherungselement ringförmig ausgebildet sind, ist ein unkontrollierter Verlust des Halters und/oder des Sicherungselements nicht zu befürchten. Die Ausbildung des Kupplungskörpers in Verbindung mit dem Halter und dem Sicherungselement stellt zudem sicher, dass hinsichtlich der Längsachse der Durchgangsbohrung lediglich Montageschritte auszuführen sind, die in axialer Richtung in Bezug auf die Durchgangsbohrung ausgerichtet sind. Dadurch, dass bei der erfindungsgemäßen Schnellkupplung auf das Einstecken eines in radialer Richtung in Bezug auf die Durchgangsbohrung des Kupplungskörper einzubringenden Rückhalters verzichtet wird, lässt sich die erfindungsgemäße Schnellkupplung problemlos in auch räumlich äußerst beengten Verhältnissen beispielsweise einhändig installieren. Die Detektion einer ordnungsgemäßen Verbindung zwischen dem Kupplungskörper und dem Einsteckteil lässt sich in vorteilhafter Weise ebenfalls einhändig feststellen, indem das Sicherungselement aus der freien Position in die Sicherungsposition überführt wird. Ein eine hohe Präzision erforderndes Einführen eines Sicherungselementes in den Kupplungskörper wird durch die erfindungsgemäße Schnellkupplung auf überraschend einfache Weise vermieden. Fernerhin zeichnet sich die erfindungsgemäße Schnellkupplung durch eine verbesserte Führung des Einsteckteils aus, was sich vorteilhaft auf die Stabilität und Robustheit der Schnellkupplung auswirkt. Im Übrigen ist die erfindungsgemäße Schnellkupplung, insbesondere der Kupplungskörper, aus ESD-Kunststoffen herstellbar, weswegen mit der erfindungsgemäßen Schnellkupplung auch die Ableitung von elektrostatischen Ladungen möglich ist. Durch die erfindungsgemäße Ausbildung und Halterung des Sicherungselements wird zudem sichergestellt, dass eine redundante Sicherung des mit der Stauchung ausgebildeten Einsteckteils in dem Kupplungskörper erfolgt. Selbst wenn der Halter als primärer Rückhalter für das Einsteckteil beispielsweise wegen eines Bruchs ausfällt, wird das Einsteckteil weiterhin zuverlässig durch das Sicherungselement in der Durchgangsbohrung des Kupplungskörpers gesichert.

Nachfolgend wird die Erfindung anhand einer lediglich ein Ausführungsbeispiel darstellenden Zeichnung genauer erläutert. Es zeigen in schematischer Darstellung:
- Fig. 1: eine perspektivische Ansicht einer erfindungsgemäßen Schnellkupplung im montierten Zustand, in Ansicht und ausschnittsweise im Teilschnitt,
- Fig. 2: eine perspektivische Ansicht eines Halters und eines Sicherungselements der erfindungsgemäßen Schnellkupplung,
- Fig. 3: einen Schnitt durch die erfindungsgemäße Schnellkupplung in einer ersten Funktionsstellung,
- Fig. 4: einen Schnitt durch die erfindungsgemäße Schnellkupplung gemäß Fig. 3 in einer zweiten Funktionsstellung.
- Fig.5: einen Schnitt durch die erfindungsgemäße Schnellkupplung gemäß Fig. 3 in einer dritten Funktionsstellung,
- Fig. 6: einen Schnitt durch die erfindungsgemäße Schnellkupplung gemäß Fig. 4 in einer vierten Funktionsstellung,
- Fig. 7: einen Schnitt durch die erfindungsgemäße Schnellkupplung gemäß Fig. 3 in einer fünften Funktionsstellung,
- Fig. 8: einen Schnitt durch eine weitere, erfindungsgemäße Schnellkupplung in einer ersten Funktionsstellung,
- Fig. 9: einen Schnitt durch die Schnellkupplung gemäß Fig. 8 in einer zweiten Funktionsstellung,
- Fig. 10: einen Schnitt durch die Schnellkupplung gemäß Fig. 8 in einer dritten Funktionsstellung,
- Fig. 11: einen Schnitt durch die Schnellkupplung gemäß Fig. 8 in einer vierten Funktionsstellung und
- Fig. 12: einen Schnitt durch die Schnellkupplung gemäß Fig. 8 in einer fünften Funktionsstellung.

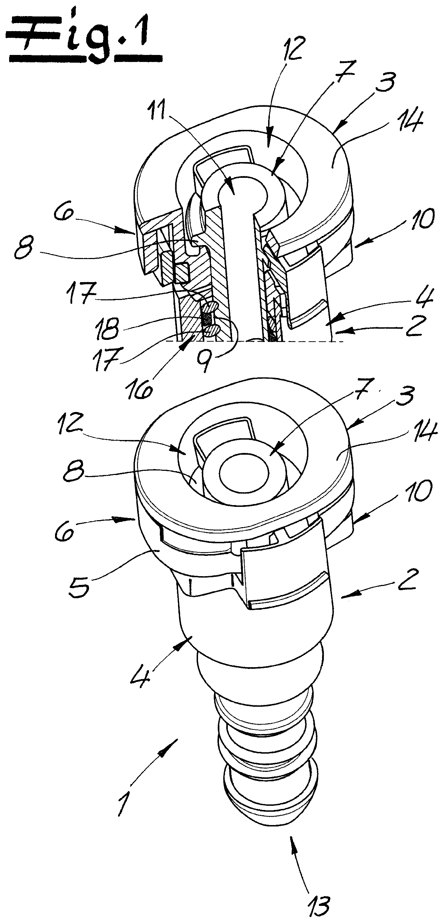

In Fig. 1 ist eine erfindungsgemäße Schnellkupplung 1 zur Herstellung einer trennbaren Verbindung in einer Fluidleitung eines Kraftfahrzeuges dargestellt. Die Schnellkupplung 1 verfügt über einen Kupplungskörper 2, welcher Kupplungskörper 2 von einem Kopfteil 3 und einem Dichtungsteil 4 gebildet ist. Um das Kopfteil 3 verläuft ein als Ringkorpus 5 ausgebildeter Halter 6 der ein rohrförmiges Einsteckteil 7 in dem Kupplungskörper 2 sichert. Das Einsteckteil 7 verfügt über eine radiale Stauchung 8, die über eine Dichtungsfläche 9 des Einsteckteils 7 übersteht. Weiterhin verfügt die Schnellkupplung 1 gemäß Fig. 1 über ein Sicherungselement 10, das gemäß Fig. 1 in einer Sicherungsposition angeordnet ist und auf diese Weise anzeigt, dass das Einsteckteil 7 ordnungsgemäß von dem Halter 6 in dem Kopfteil 3 bzw. in dem Kupplungskörper 2 der Schnellkupplung 1 festgesetzt ist.

Gemäß dem Ausführungsbeispiel weist der Kupplungskörper 2 eine Durchgangsbohrung 11 auf, die sich von einer Eingangsöffnung 12 zu einer Austrittsöffnung 13 in dem Kupplungskörper 2 erstreckt. Die Eingangsöffnung 12 ist gemäß Fig. 1 in einer Stirnseite 14 des Kopfteils 3 angeordnet, während die Austrittsöffnung 13 in einer rückseitigen Stirnseite des Dichtungsteils 4 angeordnet ist. Weiterhin ist in dem Teilschnitt von Fig. 1 dargestellt, dass in dem Dichtungsteil 4 eine Dichtungsanordnung 16 angeordnet ist, welche Dichtungsanordnung 16 aus zwei O-Ringdichtungen 17 und einem zwischen den O-Ringdichtungen 17 angeordneten Zwischenelement 18 gebildet ist. Gemäß Fig. 1 dichtet die Dichtungsanordnung 16 den Kupplungskörper 2 gegen die Dichtungsfläche 9 des Einsteckteils 7 ab.

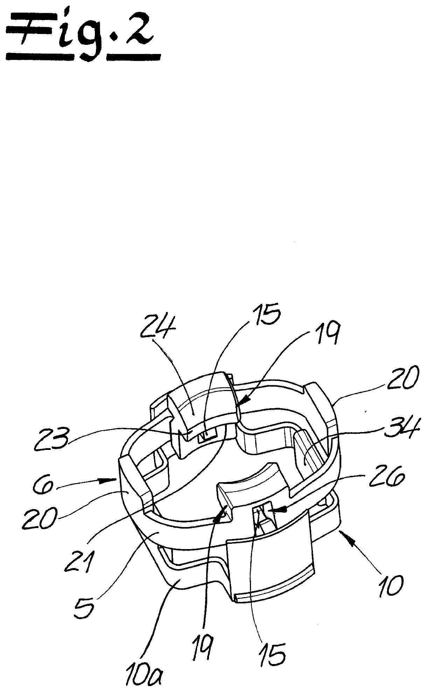

In Fig. 2 sind der Halter 6 und das Sicherungselement 10 der Schnellkupplung 1 dargestellt. Der Halter 6 verfügt über zwei Halteelemente 19 und zwei Griffplatten 20. Die beiden Halteelemente 19 und die beiden Griffplatten 20 sind jeweils diametral an dem Ringkorpus 5 des Halters 6 angeordnet. Die Halteelemente 19 weisen jeweils eine Verriegelungsfläche 21 auf, mit welcher Verriegelungsfläche 21 der Halter 6 an einer eingangsöffnungsseitigen Stirnfläche 22 der Stauchung 8 im montierten Zustand gemäß Fig. 1 anliegt. Weiterhin verfügen die Halteelemente 19 jeweils über eine Kontaktfläche 23, welche Kontaktfläche 23 gemäß dem Ausführungsbeispiel gekrümmt ausgebildet ist und die gleiche Krümmung wie das Einsteckteil 7 bzw. die Dichtungsfläche 9 aufweist. Im montierten Zustand liegen die Kontaktflächen 23 an der Dichtungsfläche 9 des Einsteckteils 7 an. Weiterhin ist in den Fig. 1 und 2 dargestellt, dass die Halteelemente 19 jeweils über eine schräge Einführfläche 24 verfügen, welche Einführflächen 24 ausgehend von einem eingangsöffnungsseitigen Ende der Einführflächen 24 hin zu einem austrittsöffnungsseitigen Ende der Einführflächen 24 schräg in Richtung einer Mittelachse bzw. Längsachse 25 der Durchgangsbohrung 11 und in Richtung der Austrittsöffnung 13 orientiert sind.

Weiterhin ist in Fig. 2 dargestellt, dass das Sicherungselement 10 über zwei diametral an einem Ringkörper 10a des Sicherungselements 10 angeordnete und als Kopplungsvorsprünge 15 ausgebildete Kopplungselemente verfügt. Die Kopplungsvorsprünge 15 durchgreifen gemäß Fig. 2 jeweils eine in den Halteelementen 19 eingebrachte Kopplungsöffnung 26, so dass sich die Kopplungsvorsprünge 15 durch die Halteelemente 19 in die Durchgangsbohrung 11 des Kupplungskörpers 2 erstrecken. Abschnitte der sich in die Durchgangsbohrung 11 erstreckenden Kopplungsvorsprünge 15 verfügen über schräge Pressflächen 27. Die Pressflächen 27 erstrecken sich von ihren eingangsöffnungsseitigen Enden zu ihren austrittsöffnungsseitigen Enden schräg in Richtung der Mittelachse bzw. Längsachse 25 und der Austrittsöffnung 13 der Durchgangsbohrung 11. Ergänzend ist in Fig. 2 gezeigt, dass das Sicherungselement über flächige Sperrelemente 34 verfügt, die kupplungskörperseitig bzw. durchgangsbohrungsseitig an den Griffplatten 20 anliegen.

In Fig. 2 ist erkennbar, dass der Ringkorpus 5 des Halters 6 oval ausgebildet ist. Durch eine Druckbeaufschlagung der Griffplatten 20 ist der Halter 6 mit der Maßgabe deformierbar, dass ausgehend von dem in Fig. 1 dargestellten, montierten Zustand ein Abstand zwischen den Kontaktflächen 23 vergrößert wird. Der Abstand zwischen den beiden Kontaktflächen 23 der Halteelemente 19 ist derart vergrößerbar, dass das Einsteckteil 7 bzw. die Stauchung 8 des Einsteckteils 7 in Richtung der Eingangsöffnung 12 des Kupplungskörpers 2 an den Halteelementen 19 vorbeibewegt und so das Einsteckteil 7 aus dem Kupplungskörper 2 entfernt werden kann.

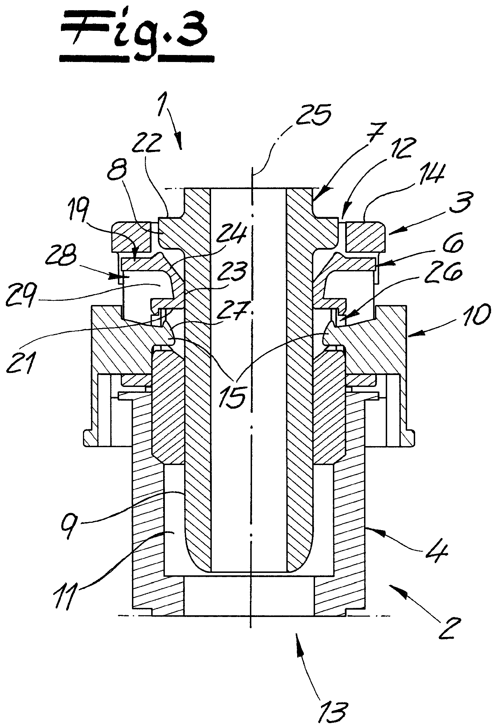

Fig. 3 ist dargestellt, dass das Einsteckteil 7 derart in den Kupplungskörper 2 mit dem Halter 6 und dem als Ringkörper 14 ausgebildeten Sicherungselement 10 eingeführt ist, dass das Einsteckteil 7 in axialer Richtung in Bezug auf die Mittelachse 25 beweglich geführt ist. Die schrägen Pressflächen 27 der Kopplungsvorsprünge 15 des Sicherungselements ragen durch die Kopplungsöffnungen 26 der an den Ringkorpus 5 des Halters 6 angeschlossenen Halteelemente 19 in die Durchgangsbohrungen 11 des Kupplungskörpers 2. Gemäß den Fig. 2 und 3 befindet sich das Sicherungselement 10 in einer freien Position, in welcher freien Position sich die Kopplungsvorsprünge 15 durch die Kopplungsöffnungen 26 in die Durchgangsbohrung 11 erstrecken. Auf diese Weise wird sichergestellt, dass das Sicherungselement 10 ausschließlich in axialer Richtung in Bezug auf die Mittelachse 25 an dem Kupplungskörper 2 bzw. dem Kopfteil 3 der Schnellkupplung 1 verschiebbar geführt ist. Weiterhin ist in Fig. 3 dargestellt, dass die Halteelemente 19 jeweils eine rückseitige Öffnung 28 aufweisen, von welcher rückseitigen Öffnung 28 aus sich eine Kopplungselementaufnahme 29 in Richtung der Kontaktfläche 23 des Halteelements 19 erstreckt.

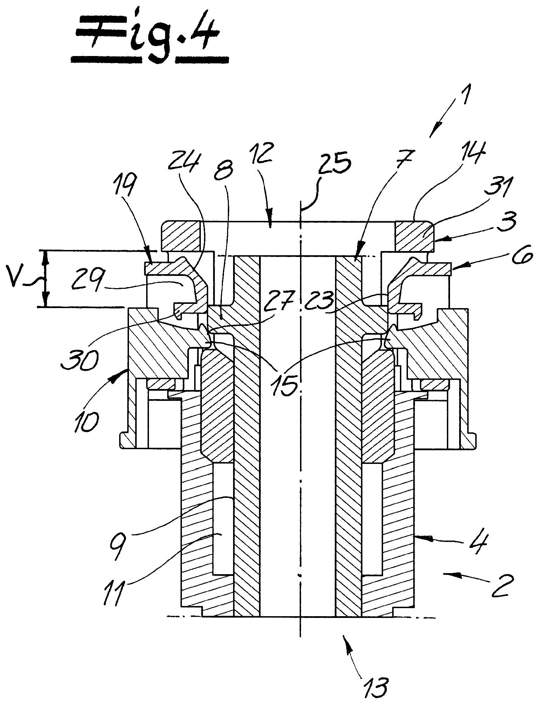

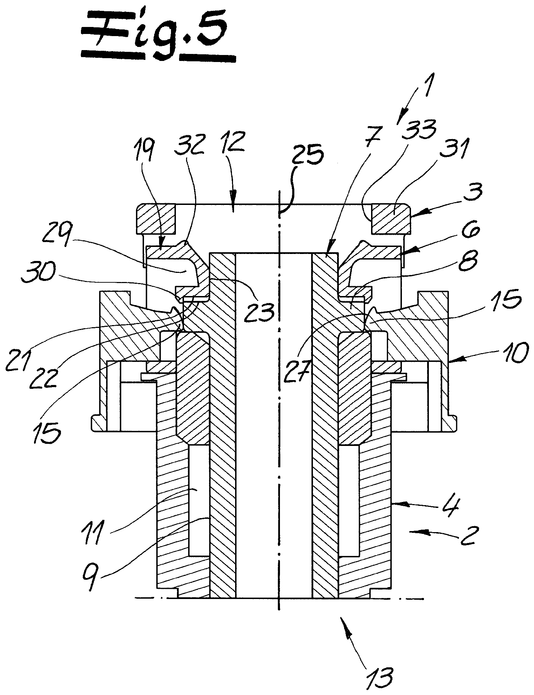

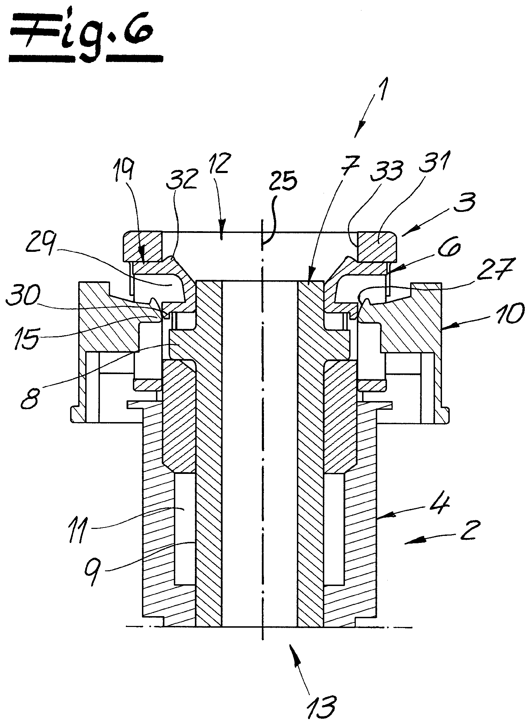

Wird ausgehend von Fig. 3 das Einsteckteil 7 weiter in die Durchgangsbohrung 11 des Kupplungskörpers 2 verlagert, wird die Stauchung 8 zur Anlage an die Einführflächen 24 der Halteelemente 19 gebracht. Dadurch werden die Halteelemente 19 in radialer Richtung in Bezug auf die Mittelachse 25 auseinandergedrückt, so dass die Stauchung 8 zwischen den Halteelementen 19 hindurch gleiten kann. Dies ist in Fig. 4 dargestellt. Weiterhin ist in Fig. 4 gezeigt, dass die Stauchung 8 an den schrägen Pressflächen 27 des Sicherungselements 10 anliegt und die Kopplungsvorsprünge 15 in radialer Richtung von der Längsachse 25 der Durchgangsbohrung 11 wegdrückt. Sobald die Stauchung 8 die Halteelemente 19 passiert hat, federn die Halteelemente 19 zurück, so dass die Verriegelungsflächen 21 der Halteelemente 19 an der eingangsöffnungsseitigen Stirnfläche 22 der Stauchung 8 anliegen und das Einsteckteil 7 in dem Kupplungskörper 2 sichern, was in Fig. 5 dargestellt ist. Durch die Stauchung 8 des Einsteckteils 7 werden die schrägen Pressflächen 27 des Sicherungselements 10 in radialer Richtung in Bezug auf die Mittelachse 25 nach außen gedrückt, was in Fig. 4 und 5 dargestellt ist. Die Verlagerung der schrägen Pressflächen 27 radial nach außen bzw. von der Längsachse 25 weg bewirkt, dass die Kopplungsvorsprünge 15 in radialer Richtung von der Mittelachse 25 weg gedrückt werden. Durch eine axiale Verlagerung des Sicherungselements 10 in Richtung der Eingangsöffnung 12 die ist es gemäß Fig. 4 und 5 möglich, Kopplungsvorsprünge 15 an dichtungsteilseitigen Rampen 30 der Halteelemente 19 vorbeizubewegen. Dies ist in Fig. 6 dargestellt.

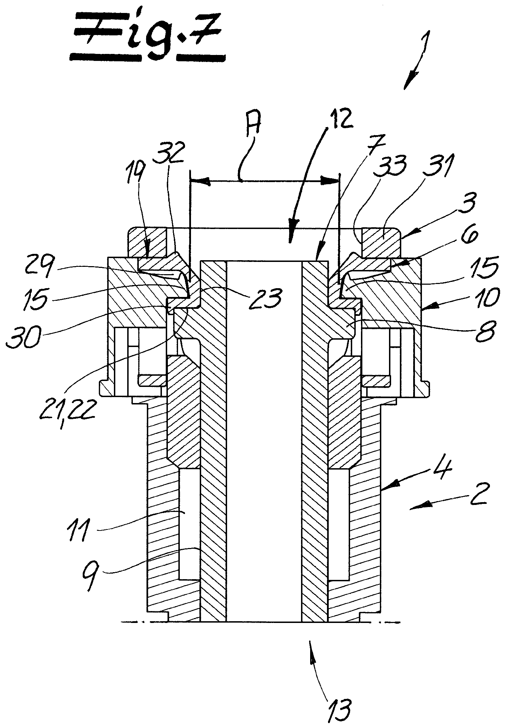

An einem eingangsöffnungsseitigen Ende eines Verschiebewegs V federn die Kopplungsvorsprünge 15 in die halteelementseitigen Kopplungselementaufnahmen 29, was in Fig. 7 dargestellt ist.

In Fig. 7 ist das Sicherungselement 10 in der Sicherungsposition dargestellt, in welcher Sicherungsposition das Sicherungselement 10 in Richtung der Eingangsöffnung 12 des Kupplungskörpers 2 bzw. Kopfteils 3 verlagert ist. Die Sicherungsposition und freie Position des Sicherungselementes 10 stellen Endpositionen der axialen Verschiebung dar, wobei die Sicherungsposition das eingangsöffnungsseitige Ende des axialen Verschiebeweges V und die freie Position das ausgangsöffnungsseitige Ende des axialen Verschiebeweges V darstellen.

In den Fig. 1 bis 7 ist dargestellt, dass das Sicherungselement 10 lediglich aus der freien Position gemäß der Fig. 3 in die Sicherungsposition gemäß Fig. 7 verlagerbar ist, wenn das Einsteckteil 7 vollständig in den Kupplungskörper 2 eingeführt ist, wobei die Stauchung 8 von den Halteelementen 19 des Halters 6 in dem Kupplungskörper 2 gehalten ist. Das Verlagern des Sicherungselementes 10 aus der freien Position gemäß der Fig. 3 in die Sicherungsposition gemäß den Fig. 1 und 7 erlaubt eine einfache Detektion der ordnungsgemäß hergestellten Verbindung zwischen dem Einsteckteil 7 und dem Kupplungskörper 2. Weiterhin ist in Fig. 7 dargestellt, dass ein radialer Abstand A zwischen den Kopplungsvorsprüngen 15 mit der Maßgabe ausgebildet ist, dass der Abstand A kleiner als der Durchmesser der Stauchung 8 des Einsteckteils 7 ist. Dadurch wird gewährleistet, dass bei einem Ausfall des Halters 6 sichergestellt ist, dass die Halteelemente 19 und/oder Kopplungsvorsprünge 15 an einer eingangsöffnungsseitigen Stirnfläche 22 der Stauchung 8 anliegen und redundant das Einsteckteil 7 in dem Kupplungskörper 2 sichern

In den Fig. 3 und 7 ist darüber hinaus dargestellt, dass das Sicherungselement 10 sowohl in der freien Position gemäß Fig. 3 als auch in der Sicherungsposition gemäß Fig. 7 mit dem Halter 6 verrastet ist.

In Fig. 7 ist fernerhin dargestellt, dass bei einer Druckbeaufschlagung des nicht dargestellten Fluidsystems das Einsteckteil 7 in Richtung der Eingangsöffnung 12 gedrückt wird. Dadurch beaufschlagt die Stauchung 8 des Einsteckteils 7 die Halteelemente 19 des Halters, wodurch der Halter gegen einen Kragen 31 des Kopfteils 3 gedrückt wird, in welchem Kragen 31 die Eingangsöffnung 12 angeordnet ist. Gemäß Fig. 7 verfügen die Halteelemente 19 jeweils über einen Arretierungsvorsprung 32, wobei die Arretierungsvorsprünge 32 an einer Durchgangsbohrungsseitigen Ringfläche 33 des Kopfteils 3 bzw. des Kragens 31 anliegen. Auf diese Weise wird sichergestellt, dass ein unbeabsichtigtes Deformieren eines von dem Halter 6 und dem Sicherungselement 10 gebildeten Aggregats verhindert wird, was eine unbeabsichtigte Freigabe des Einsteckteils 7 bedeuten würde.

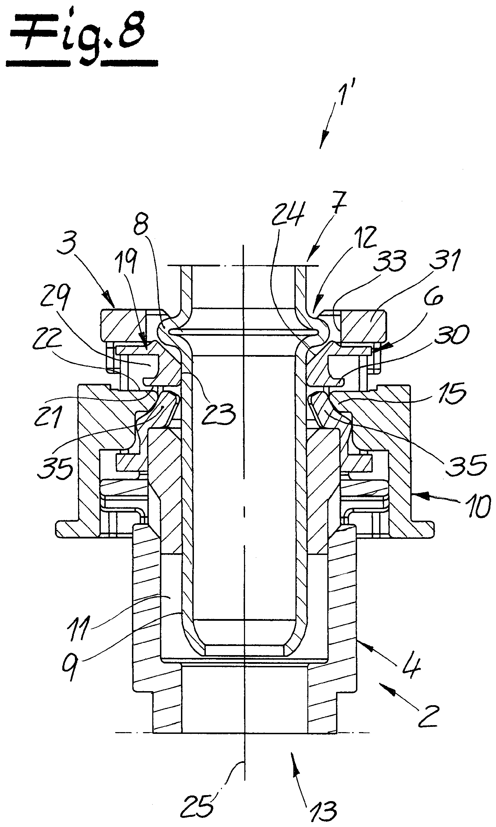

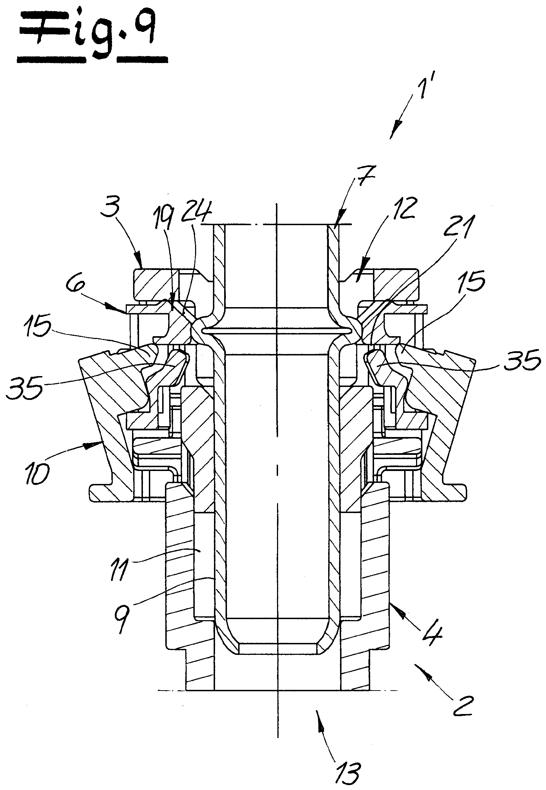

In den Fig. 8 bis 12 ist eine weitere Ausführungsform einer erfindungsgemäßen Schnellkupplung 1' dargestellt. Dabei werden in den Fig. 1 bis 7 sowie 8 bis 12 für identische Komponenten bzw. Teile der Schnellkupplung 1 und der Schnellkupplung 1' identische Bezugszeichen verwendet. In den Fig. 8 bis 12 ist dargestellt, dass der Halter (Rückhalter) 6 über Hebearme 35 verfügt, die einander diametral gegenüberliegend an den Halter 6 angeschlossen sind und die Durchgangsbohrung 11 flankieren. Den beiden in den Fig. 8 bis 12 dargestellten Hebearmen 35 ist jeweils ein Kopplungsvorsprung 15 des Sicherungselements 10 zugeordnet, wobei die Kopplungsvorsprünge 15 in der in Fig. 8 dargestellten freien Position des Sicherungselements 10 an den Hebearmen 35 des Halters 6 anliegen. In Fig. 8 ist der vormontierte Zustand der Schnellkupplung 1' dargestellt, wobei das Kopfteil 3 des Kupplungskörpers 2 in den Rückhalter 6 und das Sicherungselement 10 eingeführt und mit dem Dichtungsteil 4 verrastet ist, wobei der Halter 6 an dem Kragen 3 des Kopfteils 3 anliegt. Das Einsteckteil 7 ist gemäß Fig. 8 lediglich derart in die Durchgangsbohrung 11 eingeführt, dass die radiale Stauchung 8 des Einsteckteils 7 Einführflächen 24 des Rückhalters 6 noch nicht beaufschlagt. Wird das Einsteckteil 7 in Einführrichtung bzw. von der Eingangsöffnung 12 in Richtung der Austrittsöffnung 13 entlang der Längsachse 25 der Durchgangsbohrung 11 in den Kupplungskörper 2 hineingedrückt, so wird die Stauchung 8 zur Anlage an die Einführflächen 24 des Rückhalters 6 gebracht. Dadurch wird der Rückhalter 6 geweitet, was in Fig. 9 dargestellt wird.

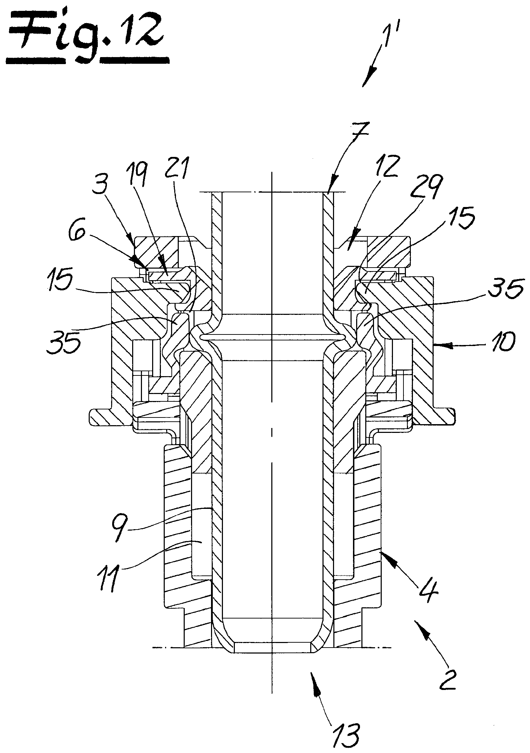

In Fig. 9 befinden sich Kontaktflächen 23 der Haltelement 19 des Rückhalters 6 radial außerhalb der Stauchung 8 und liegen an der Stauchung 8 an. Durch das Aufweiten des Rückhalters 6 wird das Sicherungselement 10 ebenfalls aufgeweitet, wobei eine Verlagerung des Sicherungselements 10 aus der in den Fig. 8 und 9 dargestellten freien Position in die in Fig. 12 dargestellte Sicherungsposition ausgeschlossen ist, da der sicherungselementseitige Kopplungsvorsprung 15 nicht an der halterseitigen Verriegelungsfläche (Blockierfläche) 21 vorbei in Richtung der Eingangsöffnung 12 bewegt werden kann.

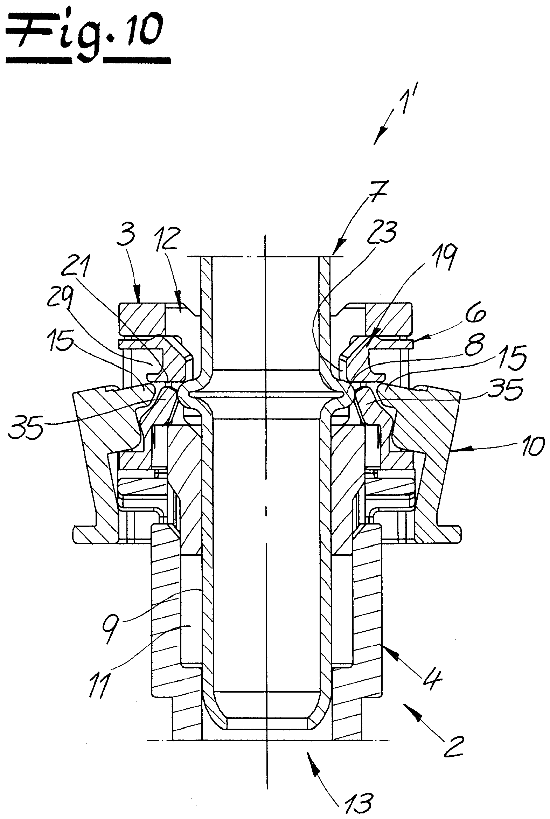

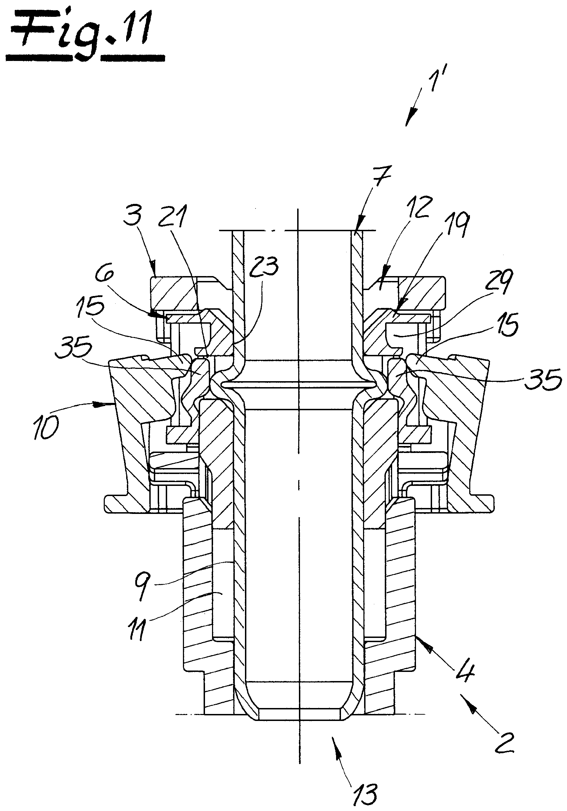

In den Fig. 10 und 11 ist das weitere Einführen des Einsteckteils 7 in Richtung der Ausgangsöffnung 13 dargstellt, wobei in Fig. 10 sowohl die Haltelemente 19 des Halters 6 als auch die Hebearme 35 an der Stauchung anliegen. Dadurch, dass die Kontaktfläche 23 des Halters 6 gemäß Fig. 10 noch nicht an der Dichtungsfläche 9 des Einsteckteils 7 anliegt, ist der Halter 6 gemäß Fig. 10 noch geweitet, und ein Verlagern des Sicherungselementes 10 in Richtung der Eingangsöffnung 12 wird durch die Anlage der Kopplungsvorsprünge 15 an den Verriegelungsflächen 21 verhindert. Wird das Einsteckteil 7 ausgehend von der in Fig. 10 gezeigten Position weiter in Richtung der Austrittsöffnung 13 gemäß Fig. 11 verlagert, werden die Kontaktflächen 23 der Halteelemente 19 zur Anlage an die Dichtungsfläche 9 des Einsteckteils 7 gebracht und die Hebearme 35 durch die Stauchung 8 auseinandergedrückt. In Fig. 11 ist die Übergangsposition bzw. Verlagerungsposition des Sicherungselements 10 dargestellt, in welche Verlagerungsposition die Hebearme 35 durch die Stauchung 8 die Kopplungsvorsprünge (Kopplungselemente) 15 des Sicherungselements 10 derart auseinanderdrücken, dass die Kopplungsvorsprünge 15 an den Verriegelungsflächen 21 des Halters 6 vorbeigleiten können. Das Sicherungselement 10 ist ausgehend von der in Fig. 11 dargestellten Verlagerungsposition in die in der Fig. 12 dargestellte Verriegelungsposition in Richtung der Eingangsöffnung 12 des Kopfteils 3 verlagerbar, wobei die Kopplungsvorsprünge 15 des Sicherungselements 10 in halterseitige Kopplungselementaufnahmen 29 federn. In der in Fig. 12 dargestellten Verriegelungsposition des Sicherungselements 10 ist eine Entfernung des Einsteckteils 7 aus dem Kupplungskörper 2 sowohl durch den Halter 6 als auch das Sicherungselement 10 blockiert. Die Lösung der Verbindung zwischen dem Kupplungskörper 2 und dem Einsteckteil 7 gemäß der weiteren Schnellkupplung 1' erfolgt in analoger Weise zu der Trennung der Verbindung zwischen dem Einsteckteil 7 und dem Kupplungskörper 2 gemäß der Schnellkupplung 1.

Vorzugsweise und gemäß dem Ausführungsbeispiel gemäß den Fig. 8 bis 12 weisen die federnd an dem Halter 6 gelagerten Hebearme 35 eine geringere Rückstellkraft als die federnd an dem Rückhalter 6 angeschlossenen Haltelemente 19 auf. Auf diese Weise wird, vorzugsweise und wie in den Fig. 8 bis 12 gezeigt, gewährleistet, dass bei einer Beaufschlagung der Hebearme 35 des Halters 6 durch die Stauchung 8 des Einsteckteils 7 lediglich die Hebearme verformt bzw. nach außen gedrückt werden und die Haltelemente 19 des Rückhalters 6 an dem Einsteckteil bzw. bevorzugt und gemäß der Fig. 11 an der zylindrischen Dichtungsfläche 9 des Einsteckteils 7 anliegen.

## Patentansprüche

1. Schnellkupplung zur Herstellung einer trennbaren Verbindung in einer Fluidleitung mit einem Kupplungskörper (2), einem Einsteckteil (7), einem Halter (6) und einem Sicherungselement (10), wobei der Kupplungskörper (2) eine Durchgangsbohrung (11) aufweist, wobei mit dem Halter (6) das in die Durchgangsbohrung (11) eingeführte Einsteckteil (7) in der Durchgangsbohrung (11) vorzugsweise reversibel festsetzbar ist, wobei sich die Durchgangsbohrung (11) von einer Einsteckteilaufnahmeöffnung (12) des Kupplungskörpers (2) bis zu einer Austrittsöffnung (13) erstreckt,
wobei der Halter (6) einen Ringkorpus (5) aufweist, wobei das Sicherungselement (10) einen Ringkörper (29) aufweist, wobei der Ringkorpus (5) und der Ringkörper (29) das Einsteckteil (7) und/oder den Kupplungskörper (2) umlaufen und wobei
der Halter (6) über zwei Betätigungseinrichtungen (20) verfügt, die einander gegenüberliegend bzw. diametral am Ringkorpus (5) bzw. am Halter (6) angeordnet sind, wobei der Halter (6) so ausgebildet ist, dass bei einer auf die Betätigungseinrichtungen (20) in radialer Richtung nach innen ausgeübten Kraft der von dem Ringkorpus (5) gebildete Halter (6) flachgedrückt wird, so dass der Abstand zwischen der Betätigungseinrichtung (20) und der Mittelachse vermindert wird,
wobei das Sicherungselement (10) in axialen Richtung in Bezug auf die Durchgangsbohrung (11) aus einer freien Position in eine Sicherungsposition verlagerbar ist, wenn das Einsteckteil (7) mit dem Halter (6) in der Durchgangsbohrung (11) gesichert ist,
**dadurch gekennzeichnet, dass** die freie Position ein austrittsöffnungsseitiges Ende eines axialen Verschiebeweges darstellt, entlang welchem Verschiebeweg das Sicherungselement (10) aus der freien Position in die Sicherungsposition verlagerbar ist.

2. Schnellkupplung nach Anspruch 1, wobei das Sicherungselement (10) in der Sicherungsposition an den Halter (6) angeschlossen bzw. mit dem Halter (6) verbunden ist.

3. Schnellkupplung nach einem der Ansprüche 1 oder 2, wobei das Sicherungselement (10) in der freien Position und/oder in der Sicherungsposition mit dem Halter (6) vorzugsweise reversibel verrastbar ist.

4. Schnellkupplung nach einem der Ansprüche 1 bis 3, wobei das Sicherungselement (10) und/oder der Halter (6) unverlierbar an dem Kupplungskörper (2) gehalten ist/sind.

5. Schnellkupplung nach einem der Ansprüche 1 bis 4, wobei ein sicherungselementseitiges Kopplungselement als Kopplungsvorsprung (15) ausgebildet ist, wobei ein halbseitiges komplementäres Kopplungselement als Kopplungsöffnung (26) ausgebildet ist und wobei der Kopplungsvorsprung (15) in der freien Position des Sicherungselements (10) in der Kopplungsöffnung (26) angeordnet ist.

6. Schnellkupplung nach einem der Ansprüche 1 bis 4, wobei an dem Halter (6) ein Hebearm (35) bzw. Hebearme (35) angeformt ist bzw. sind, wobei das sicherungselementseitige Kopplungselement an dem Hebearm (35) bzw. die sicherungselementseitigen Kopplungselemente jeweils an einem Hebearm (35) anliegt bzw. anliegen und wobei eine radiale Stauchung (8) des Einsteckteils (7) ausschließlich über den Hebearm (35) bzw. die Hebearme (35) gegen das Kopplungselement bzw. die Kopplungselemente drückt.

7. Schnellkupplung nach Anspruch 5 oder 6, wobei der Kopplungsvorsprung (15) in der freien Position des Sicherungselements (10) in radialer Richtung in die Durchgangsbohrung (11) ragt und/oder an dem halterseitigen Hebearm (35) anliegt und wobei der Kopplungsvorsprung (15) bei Einführen des Einsteckteils (7) in den Kupplungskörper (2) durch eine Stauchung (8) des Einsteckteils (7) derart in radialer Richtung von der Längsachse (25) der Durchgangsbohrung (11) wegdrückbar ist und dass der Kopplungsvorsprung (15) aus der Kopplungsöffnung (26) herausdrückbar bzw. von der Durchgangsbohrung wegdrückbar ist, dass das Sicherungselement (10) in axialer Richtung aus der freien Position in die Sicherungsposition verschiebbar ist.

8. Schnellkupplung nach einem der Ansprüche 5 bis 7, wobei das Kopplungselement eine derart ausgebildete schräge Pressfläche (27) aufweist, dass das Sicherungselement (10) von der Eingangsöffnung (12) weggedrückt wird, wenn die Stauchung (8) des Einsteckteils (7) an der schrägen Pressfläche (27) anliegt und dadurch das Kopplungselement von der Längsachse (25) der Durchgangsbohrung (11) wegdrückt.

9. Schnellkupplung nach einem der Ansprüche 5 bis 8, wobei der Halter (6) eine Kopplungselementaufnahme (29) aufweist, welche Kopplungselementaufnahme (29) auf einer der Durchgangsbohrung (11) abgewandten Oberfläche des Halters (6) offen ausgebildet ist und wobei das sicherungselementseitige Kopplungselement in der Sicherungsposition in der Kopplungselementaufnahme (29) aufnehmbar ist.

10. Schnellkupplung nach einem der Ansprüche 5 bis 9, wobei das Sicherungselement (10) vorzugsweise zwei als Kopplungsvorsprünge ausgebildete Kopplungselemente (15) aufweist, wobei die Kopplungsvorsprünge (15) einen in Richtung eines Durchmessers (25) der Durchgangsbohrung (11) eingestellten Abstand zueinander aufweisen, welcher Abstand kleiner als der Durchmesser der Stauchung (8) des Einsteckteils (7) ist, so dass das Einsteckteil (7) in der Sicherungsposition des Sicherungselementes (10) jeweils durch den Halter (6) und das Sicherungselement (10) an dem Kupplungskörper (2) gesichert ist.

11. Schnellkupplung nach einem der Ansprüche 1 bis 10, wobei der Halter (6) zumindest ein Halteelement (19) aufweist, welches Halteelement (19) im montierten Zustand mit der Stauchung (8) des Einsteckteils (7) zusammenwirkt und mit welchem Halteelement (19) das Einsteckteil in dem Kupplungskörper (2) sicherbar ist.

12. Schnellkupplung nach Anspruch 11, wobei das Halteelement (19) eine in dem Kupplungskörper (2) vorzugsweise in dem Kopfteil (3) des Kupplungskörpers (2) angeordnete Aussparung durchgreift, um das Einsteckteil (7) in dem Kupplungskörper zu sichern.

13. Schnellkupplung nach einem der Ansprüche 1 bis 12, wobei das Sicherungselement (10) zumindest ein flächiges Sperrelement (34) aufweist, welches flächige Sperrelement (34) in der Sicherungsposition das halterseitige Betätigungselement (20) durchgangsbohrungsseitig hintergreift und das Sicherungselement (10) mit dem Halter (6) derart koppelt, dass der Halter (6) im montierten Zustand der Schnellkupplung (1) ausschließlich zusammen mit dem Sicherungselement (10) deformierbar ist.

14. Schnellkupplung nach einem der Ansprüche 1 bis 13, wobei der Halter (6) und/oder das Sicherungselement (10) aus einem reversibel verformbaren bzw. flexiblen Material, vorzugsweise einem Kunststoff gefertigt ist / sind.

## Claims

1. A quick coupling for establishing a separable connection in a fluid line with a coupling body (2), an insertion part (7), a holder (6) and a safety element (10), wherein the coupling body (2) has a through bore (11), wherein the insertion part (7) introduced into the through bore (11) can be preferably reversibly fixed in the through bore (11) with the holder (6), wherein the through bore (11) extends from an insertion opening (12) of the coupling body (2) up to an outlet opening (13),
wherein the holder (6) has a ring corpus (5), wherein the safety element (10) has a ring body (29), wherein the ring corpus (5) and the ring body (29) circulate around the insertion part (7) and/or the coupling body (2), and
wherein the holder (6) has two activating devices (20), which lie opposite each other or diametrically on the ring corpus (5) or on the holder (6), wherein the holder (6) is designed in such a way that the holder (6) formed by the ring corpus (5) is pressed flat given a force exerted inwardly in a radial direction on the activating devices (20), so that the distance between the activating device (20) and the central axis is diminished,
wherein the safety element (10) can be shifted from a free position into a secured position in an axial direction in relation to the through bore (11) if the insertion part (7) is secured in the through bore (11) with the holder (6),
**characterized in that** the free position represents an end of an axial displacement path on the outlet opening side, wherein the safety element (10) can be shifted from the free position into the safety position along this displacement path.

2. The quick coupling according to claim 1, wherein the safety element (10) is hooked up to the holder (6) or connected with the holder (6) in the secured position.

3. The quick coupling according to one of claims 1 or 2, wherein the safety element (10) can be preferably reversibly latched with the holder (6) in the free position and/or in the secured position.

4. The quick coupling according to one of claims 1 to 3, wherein the safety element (10) and/or the holder (6) is/are captively held on the coupling body (2).

5. The quick coupling according to one of claims 1 to 4, wherein a safety element-side coupling element is designed as a coupling projection (15), wherein a unilateral complementary coupling element is designed as a coupling opening (26), and wherein the coupling projection (15) is arranged in the coupling opening (26) in the free position of the safety element (10).

6. The quick coupling according to one of claims 1 to 4, wherein a lever arm (35) or lever arms (35) is/are molded onto the holder (6), wherein the safety element-side coupling element abuts against the lever arm (35) or the safety element-side coupling elements each abut against a lever arm (35), and wherein a radial compression (8) of the insertion part (7) presses against the coupling element or coupling elements exclusively via the lever arm (35) or lever arms (35).

7. The quick coupling according to claim 5 or 6, wherein the coupling projection (15) protrudes into the through bore (11) in a radial direction and/or abuts against the holder-side lever arm (35) in the free position of the safety element (10), and wherein the coupling projection (15), during insertion of the insertion part (7) into the coupling body (2), can be pressed away from the longitudinal axis (25) of the through bore (11) in an axial direction via a compression (8) of the insertion part (7), and the coupling projection (15) can be pressed out of the coupling opening (26) or away from the through bore, such that the safety element (10) can be moved in an axial direction out of the free position into the secured position.

8. The quick coupling according to one of claims 5 to 7, wherein the coupling element has an inclined pressing surface (27) designed in such a way that the safety element (10) is pressed away from the inlet opening (12) if the compression (8) of the insertion part (7) abuts against the inclined pressing surface (27), and thereby presses the coupling element away from the longitudinal axis (25) of the through bore (11).

9. The quick coupling according to one of claims 5 to 8, wherein the holder (6) has a coupling element receptacle (29), wherein this coupling element receptacle (29) has an open design on a surface of the holder (6) facing away from the through bore (11), and wherein the safety element-side coupling element can be received in the coupling element receptacle (29) in the secured position.

10. The quick coupling according to one of claims 5 to 9, wherein the safety element (10) preferably has two coupling elements (15) designed as coupling projections, wherein the coupling projections (15) have a distance from each other set in the direction of a diameter (25) of the through bore (11), wherein this distance is smaller than the diameter of the compression (8) of the insertion part (7), so that the insertion part (7) is secured to the coupling body (2) by the respective holder (6) and the safety element (10) in the secured position of the safety element (10).

11. The quick coupling according to one of claims 1 to 10, wherein the holder (6) has at least one holding element (19), wherein this holding element (19) interacts with the compression (8) of the insertion part (7) in the assembled state, and this holding element (19) can be used to secure the insertion part in the coupling body (2) .

12. The quick coupling according to claim 11, wherein the holding element (19) engages through a recess arranged in the coupling body (2), preferably in the top part (3) of the coupling body (2), so as to secure the insertion part (7) in the coupling body.

13. The quick coupling according to one of claims 1 to 12, wherein the safety element (10) has at least one flat locking element (34), wherein this flat locking element (34) engages behind the holder-side activating element (20) on the through bore side in the secured position, and couples the safety element (10) with the holder (6) in such a way that the holder (6) can be deformed exclusively together with the safety element (10) in the assembled state of the quick coupling (1).

14. The quick coupling according to one of claims 1 to 13, wherein the holder (6) and/or the safety element (10) is/are fabricated out of a reversibly deformable or flexible material, preferably out of a plastic.

## Revendications

1. Raccord rapide pour la réalisation d'une liaison séparable dans une conduite de fluide avec un corps d'accouplement (2), une partie d'emboîtement (7), un support (6) et un élément de fixation (10), sachant que le corps d'accouplement (2) comporte un trou de passage (11), sachant qu'avec le support (6), la partie d'emboîtement (7) introduite dans le trou de passage (11) peut être de préférence fixée fermement de façon réversible dans le trou de passage (11), sachant que le trou de passage (11) s'étend d'une ouverture de logement de partie d'emboîtement (12) du corps d'accouplement (2) jusqu'à une ouverture de sortie (13),
sachant que le support (6) comporte un corpus annulaire (5), sachant que l'élément de fixation (10) comporte un corps annulaire (29), sachant que le corpus annulaire (5) et le corps annulaire (29) entourent la partie d'emboîtement (7) et/ou le corps d'accouplement (2) et
sachant que le support (6) dispose de deux systèmes d'actionnement (20), qui sont disposés opposés l'un à l'autre ou diamétralement sur le corpus annulaire (5) ou sur le support (6), sachant que le support (6) est constitué de telle manière qu'avec une force exercée sur les systèmes d'actionnement (20) dans la direction radiale vers l'intérieur, le support (6) formé par le corpus annulaire (5) est comprimé à plat de telle sorte que la distance entre le système d'actionnement (20) et l'axe médian est réduite,
sachant que l'élément de fixation (10) peut être déplacé en direction axiale par rapport au trou de passage (11) d'une position libre dans une position de fixation, lorsque la partie d'emboîtement (7) est fixée avec le support (6) dans le trou de passage (11),
**caractérisé en ce que** la position libre représente une extrémité du côté ouverture de sortie d'une course de déplacement axiale, course de déplacement le long de laquelle l'élément de fixation (10) peut être déplacé de la position libre à la position de fixation.

2. Raccord rapide selon la revendication 1, sachant que l'élément de fixation (10) est raccordé dans la position de fixation au support (6) ou relié au support (6).

3. Raccord rapide selon l'une quelconque des revendications 1 ou 2, sachant que l'élément de fixation (10) peut être enclenché avec le support (6) dans la position libre et/ou dans la position de fixation, de préférence de façon réversible.

4. Raccord rapide selon l'une quelconque des revendications 1 à 3, sachant que l'élément de fixation (10) et/ou le support (6) est/sont maintenu(s) de façon imperdable sur le corps d'accouplement (2).

5. Raccord rapide selon l'une quelconque des revendications 1 à 4, sachant qu'un élément d'accouplement du côté de l'élément de fixation est constitué comme une saillie d'accouplement (15), sachant qu'un élément d'accouplement complémentaire sur une moitié est constitué comme une ouverture d'accouplement (26) et sachant que la saillie d'accouplement (15) est disposée dans la position libre de l'élément de fixation (10) dans l'ouverture d'accouplement (26).

6. Raccord rapide selon l'une quelconque des revendications 1 à 4, sachant qu'un bras de levage (35) ou des bras de levage (35) est ou sont conformé(s) sur le support (6), sachant que l'élément d'accouplement du côté de l'élément de fixation repose sur le bras de levage (35) ou les éléments d'accouplement reposent respectivement sur un bras de levage (35) et sachant qu'un refoulement radial (8) de la partie d'emboîtement (7) appuie exclusivement par le biais du bras de levage (35) ou des bras de levage (35) contre l'élément d'accouplement ou les éléments d'accouplement.

7. Raccord rapide selon la revendication 5 ou 6, sachant que la saillie d'accouplement (15) dépasse dans la position libre de l'élément de fixation (10) dans la direction radiale dans le trou de passage (11) et/ou vient reposer sur le bras de levage (35) du côté support et sachant que la saillie d'accouplement (15) peut être repoussée lors de l'introduction de la partie d'emboîtement (7) dans le corps d'accouplement (2) par un refoulement (8) de la partie d'emboîtement (7) dans la direction radiale de l'axe longitudinal (25) du trou de passage (11) de telle manière que la saillie d'accouplement (15) peut être ressortie de l'ouverture d'accouplement (26) ou repoussée du trou de passage, de sorte que l'élément de fixation (10) peut être déplacé dans la direction axiale de la position libre dans la position de fixation.

8. Raccord rapide selon l'une quelconque des revendications 5 à 7, sachant que l'élément d'accouplement comporte une surface de pression (27) oblique constituée de telle manière que l'élément de fixation (10) est repoussé de l'ouverture d'entrée (12), lorsque le refoulement (8) de la partie d'emboîtement (7) vient reposer sur la surface de pression (27) oblique et rejette de ce fait l'élément d'accouplement de l'axe longitudinal (25) du trou de passage (11).

9. Raccord rapide selon l'une quelconque des revendications 5 à 8, sachant que le support (6) comporte un logement d'élément d'accouplement (29), lequel logement d'élément d'accouplement (29) est constitué ouvert sur une surface du support (6) éloignée du trou de passage (11) et sachant que l'élément d'accouplement du côté de l'élément de fixation peut être logé dans la position de fixation dans le logement d'élément d'accouplement (29).

10. Raccord rapide selon l'une quelconque des revendications 5 à 9, sachant que l'élément de fixation (10) comporte de préférence deux éléments d'accouplement (15) constitués comme des saillies d'accouplement, sachant que les saillies d'accouplement (15) comportent une distance l'une par rapport à l'autre établie en direction d'un diamètre (25) du trou de passage (11), laquelle distance est plus petite que le diamètre du refoulement (8) de la partie d'emboîtement (7) de telle sorte que la partie d'emboîtement (7) est respectivement fixée sur le corps d'accouplement (2) dans la position de fixation de l'élément de fixation (10) par le support (6) et l'élément de fixation (10).

11. Raccord rapide selon l'une quelconque des revendications 1 à 10, sachant que le support (6) comporte au moins un élément de support (19) lequel élément de support (19) coopère à l'état monté avec le refoulement (8) de la partie d'emboîtement (7) et avec lequel élément de fixation (19) la partie d'emboîtement peut être fixée dans le corps d'accouplement (2).

12. Raccord rapide selon la revendication 11, sachant que l'élément de support (19) vient en prise à travers un évidement disposé dans le corps d'accouplement (2), de préférence dans la partie de tête (3) du corps d'accouplement (2) pour fixer la partie d'emboîtement (7) dans le corps d'accouplement.

13. Raccord rapide selon l'une quelconque des revendications 1 à 12, sachant que l'élément de fixation (10) comporte au moins un élément de blocage plan (34), lequel élément de blocage plan (34) vient en prise par l'arrière dans la position de fixation du côté du trou de passage avec l'élément d'actionnement (20) du côté support et accouple l'élément de fixation (10) au support (6) de telle sorte que le support (6) ne peut être déformé à l'état monté du raccord rapide (1) qu'ensemble avec l'élément de fixation (10).

14. Raccord rapide selon l'une quelconque des revendications 1 à 13, sachant que le support (6) et/ou l'élément de fixation (10) est/sont fabriqué(s) dans un matériau déformable ou flexible de façon réversible, de préférence une matière plastique.
